# EUROPÄISCHE PATENTSCHRIFT

(11) **EP 1 777 907 B1**
(45) Veröffentlichungstag und Bekanntmachung des Hinweises auf die Patenterteilung: **12.12.2007**
(21) Anmeldenummer: 05022902.0
(22) Anmeldetag: 20.10.2005
(51) Int. Cl.: H04L 29/06

(54) **Vorrichtungen und Verfahren zum Durchführen von kryptographischen Operationen in einem Server-Client-Rechnernetzwerksystem**
Method and devices for carrying out cryptographic operations in a client-server network
Méthode et dispositifs pour effectuer des opérations cryptographiques dans un réseau type client-server

(43) Veröffentlichungstag der Anmeldung: 25.04.2007
(73) Patentinhaber: UBS AG, 8001 Zürich (CH)
(72) Erfinder: Hiltgen, Alain P., CH-8057 Zürich (CH)
(74) Vertreter: Schmidt, Steffen J.

(56) Entgegenhaltungen:
- WO-A-01/48948
- US-A1- 2001 014 158

## Beschreibung

### Hintergrund der Erfindung

Die vorliegende Erfindung betrifft ein Server-Client-Rechnernetzwerksystem zum Durchführen von kryptografischen Operationen und ein Verfahren zum Durchführen von kryptografischen Operationen in einem solchen Rechnernetzwerksystem. Insbesondere betrifft die Erfindung solche Rechnernetzwerksysteme, bei denen ein Nutzer (aus einer Vielzahl von Nutzern) mittels einer Netzwerk-Arbeitsstation eine sichere Verbindung mit einem zentralen Rechnersystem initiieren und anschließend über diese Verbindung Datenkommunikation mit dem zentralen Rechnersystem abwickeln möchte.

Ein solches Szenario wird zum Beispiel im Rahmen von sog. online banking realisiert. Dabei verfügt ein Kunde eines Bankinstitutes über eine Netzwerk-Arbeitsstation (Rechnereinheit, zum Beispiel PC, mit alphanumerischer Anzeige, Tastatur und Schnittstelle zum Netzwerk, zum Beispiel Internet), auf der ein sog. Browser installiert ist. WWW-Browser sind Computerprogramme zum Betrachten von Webseiten im Internet (= WWW-Seiten). Mit dieser Netzwerk-Arbeitsstation kann sich der Kunde sich über das Netzwerk mit dem zentralen Rechnersystem des Bankinstitutes verbinden und Banktransaktionen (zum Beispiel Kontoabfragen, Überweisungen, Depotbewegungen, oder dergl.) ausführen. Ein anderes, ebenfalls von der Erfindung erfasstes Szenario ist das Versenden von e-mails von einem Kunden/Partner einer Institution, (zum Beispiel des Bankinstitutes) zu der Institution im Rahmen von vertraulichem Schriftwechsel, der zu diesem Zweck verschlüsselt wird. Aber auch Internet-Auktionen, virtuelle Kaufhäuser, oder dergl. basieren auf einem derartigen Szenario.

Dabei sind derartige Netzwerkverbindungen zum Schutz gegen nicht erwünschte Eindringlinge oder Kriminelle durch die unterschiedlichsten Mechanismen geschützt. Dazu zählen sog. PIN/TAN - Verfahren, bei denen ein Nutzer sich gegenüber einer Institution mittels einer Zugangsnummer und einer nur ihm bekannten statischen Kennung (personal identification number = PIN) zu erkennen gibt. Anschließend kann er bei der Institution bestimmte Transaktionen ausführen, zu deren Abschluss er eine einmal gültige Transaktionsnummer (= TAN) einzugeben hat. Derartige Verfahren sind zwar weit verbreitet, aber relativ unsicher, da die PIN statisch ist und solange gültig ist, bis der Nutzer sie gegen eine andere austauscht. Die lediglich einmal gültige TAN wird aus einer sog. Streichliste genommen, welche dem Nutzer elektronisch oder als Kopie zugestellt worden ist.

Abgesehen von dem Entwenden der schriftlich niedergelegten oder als Datei vorgehaltenen PIN/TAN Information ist es auch möglich, durch einen sog. Mittelsmann-Angriff (man-in-the-middle attack) in der Netzwerkverbindung zwischen dem Nutzer und der Institution diese Daten in unerlaubter Weise zu erlangen und für kriminelle Zwecke zu nutzen (ohne dass der rechtmäßige Nutzer dies bemerkt). Ein Man-In-The-Middle-Angriff ist eine Angriffsform, bei der Angreifer entweder physikalisch, aber heute meist logisch, zwischen den beiden Kommunikationspartnern steht und mit seinem System komplette Kontrolle über den Datenverkehr zwischen zwei oder mehreren Netzwerkteilnehmern hat. Er kann die Informationen nach Belieben einsehen und sogar manipulieren. Diese Situation kann zum Beispiel dadurch erreicht werden, dass der Angreifer Kontrolle über einen Router hat, durch den der Datenverkehr geschleust wird. Es ist auch möglich, dass der Angreifer eine falsche Zieladresse für die Internet-Kommunikation vorgibt und leitet dadurch den Verkehr durch seinen eigenen Rechner (Poison Routing). Am effektivsten lässt sich dieser Angriffsform mit einer Verschlüsselung der Datenpakete entgegenwirken, wobei allerdings die Zertifikate der Schlüssel über ein zuverlässiges Medium verifiziert werden sollten. Es muss also eine gegenseitige Authentifizierung stattfinden. Dazu müssen die beiden Kommunikationspartner auf anderem Wege ihre digitalen Zertifikate oder einen gemeinsamen Schlüssel ausgetauscht haben, d.h. sie müssen sich "kennen". Sonst kann z.B. ein Angreifer bei einer ersten Verbindungsaufnahme beiden Kommunikationspartner falsche Schlüssel vortäuschen und somit auch den verschlüsselten Datenverkehr mitlesen.

Um dies zu erschweren, wurden Protokolle wie zum Beispiel das von der Firma Netscape entwickelte SSL (Secure Sockets Layer) Übertragungsprotokoll vereinbart, die es erlauben, verschlüsselte Verbindungen über eine potenziell unsichere Internet-Verbindung aufzubauen. Es wird heute von allen gängigen WWW-Browsern unterstützt und kommt in der Praxis (z.B. beim online-Banking) zum Einsatz. Der URL (Unique Resource Locator) einer WWW-Seite, die gemäß dem SSL Protokoll verschlüsselt übertragen wird, ist erkennbar am Präfix https:// (statt http:// beim unverschlüsselten Datentransfer). Außerdem zeigen die meisten WWW-Browser die unter dem SSL Protokoll zustande gekommene Verbindung durch ein Symbol (z.B. ein Vorhängeschloss) in der Statusleiste an.

Das SSL-Protokoll besteht aus zwei Schichten (layers): Zu Grunde liegt in der untersten Ebene das SSL Record Protocol, das zur Kapselung verschiedener höherer Protokolle (higher level protocols) dient. Ein Beispiel dafür ist das SSL Handshake Protocol zur Authentifizierung von Client und Server und der Vereinbarung des verwendeten Verschlüsselungsverfahrens, oder das HTTP Protokoll zur Übertragung von Webseiten.

Es gibt verschiedene SSL-Varianten, die zum Teil auch mit TLS (Transport Layer Security) bezeichnet werden. Die jeweils verwendete SSL-Variante wird beim Verbindungsaufbau zwischen dem WWW-Browser und dem WWW-Server automatisch ausgehandelt. Zur Verschlüsselung der Daten bei einer SSL-Verbindung kommt meist das Verschlüsselungs-Verfahren RC4 zum Einsatz. Die kryptografische Sicherheit dieses Algorithmus ist abhängig von der Länge des Schlüssels, der zur Verschlüsselung eingesetzt wird.

Beim Aufbau einer SSL-Verbindung generiert der WWW-Browser einen zufälligen Schlüssel (Sitzungsschlüssel = Session Key), der für die Dauer der Verbindung zur Verschlüsselung genutzt wird. Damit die SSL-Verbindung nicht abgehört werden kann, muss zunächst dieser Sitzungsschlüssel auf einem sicheren Weg zum WWW-Server übertragen werden. Um dies zu gewährleisten, wird der Sitzungsschlüssel seinerseits mit einem öffentlichen Schlüssel-Verfahren (Public Key Verfahren), zum Beispiel RSA, verschlüsselt. Dazu präsentiert der WWW-Server seinen öffentlichen RSA-Schlüssel; der WWW-Browser verschlüsselt damit den Sitzungsschlüssel und übermittelt das Ergebnis wieder dem WWW-Server. Erst danach wird die eigentliche Datenkommunikation aufgenommen.

Wesentlich für die Sicherheit des beschriebenen Verfahrens ist dabei die Authentizität des öffentlichen Schlüssels des WWW-Servers. Ein potenzieller Angreifer könnte in einem Täuschungsversuch einen fiktiven öffentlichen RSA-Schlüssel darbieten und auch im weiteren die Rolle des "echten", vom Nutzer eigentlich angesprochenen WWW-Servers übernehmen. Die Kommunikation würde dann zwar verschlüsselt stattfinden, der Angreifer könnte aber trotzdem mit Hilfe des ihm bekannten Sitzungsschlüssel den Klartext ermitteln. Um derartige Täuschungsversuche zu erschweren, trägt der öffentliche Schlüssel des WWW-Servers zusätzliche Informationen, die seine Identität (Name des Servers, Organisation, die den Server betreibt, ...) beschreiben. Die Integrität dieser Informationen ist durch eine digitale Signatur geschützt; alles zusammen wird als Zertifikat nach dem X.509 Standard bezeichnet. Dieses Zertifikat wird von einer Zertifizierungsstelle (Certificate Authority = CA) nach der Prüfung der Identität des Server-Betreibers ausgestellt.

Ein WWW-Browser kann also den öffentlichen Schlüssel eines ihm unbekannten WWW-Servers als authentisch erkennen, wenn er die digitale Signatur der Zertifizierungsstelle überprüfen kann. Dazu benötigt er den öffentlichen Schlüssel der Zertifizierungsstelle. Die öffentlichen Schlüssel einiger Zertifizierungsstellen sind den Standard-Browsern bereits bekannt; Zertifikate von WWW-Servern, die von diesen Zertifizierungsstellen signiert sind, werden daher unmittelbar akzeptiert. Es gibt jedoch auch die Möglichkeit, dem Browser die öffentlichen Schlüssel weiterer Zertifizierungsstellen bekannt zu machen, so dass auch deren Zertifikate überprüft werden können.

Der öffentliche Schlüssel einer Zertifizierungsstelle ist (wie auch der öffentliche Schlüssel eines WWW-Servers) ein X.509-Zertifikat, das seinerseits von einer übergeordneten Zertifizierungsstelle signiert sein kann. Somit kann der Browser auch die Echtheit des Zertifizierungsstellen-Schlüssels überprüfen, wenn er die übergeordnete Zertifizierungsstelle kennt. Die Entscheidung über die Vertrauenswürdigkeit einer Zertifizierungsstelle, die nicht durch die digitale Signatur einer anderen Instanz gedeckt ist, kann aber nur der Benutzer selbst entscheiden. Wenn der WWW-Browser von einem WWW-Server ein Zertifikat erhält, dessen Echtheit er nicht nachprüfen kann, wird der Benutzer zu einer Entscheidung über das weitere Vorgehen aufgefordert.

Die Schritte zum Aufbau einer herkömmlichen SSL Verbindung zwischen Client und (Proxy) Server laufen wie folgt ab:
1. Der Client sendet eine Verbindungsanfrage an den Server.
2. Der Server antwortet mit derselben Nachricht und sendet eventuell ein Zertifikat.
3. Der Client versucht, das Zertifikat zu authentifizieren (bei Misserfolg wird die Verbindung abgebrochen). Dieses Zertifikat enthält den öffentlichen Schlüssel des Servers.
4. Nach erfolgter Authentifizierung erstellt der Client das "pre-master secret", verschlüsselt dieses mit dem öffentlichen Schlüssels des Servers und sendet es an den Server. Daraus erzeugt der Client ebenfalls das "master secret".
5. Der Server entschlüsselt das "pre-master-secret" mit seinem privaten Schlüssel und erstellt das "master secret".
6. Client und Server erstellen aus dem "master secret" den "session-key". Das ist ein einmalig benutzter symmetrischer Schlüssel, der während der Verbindung zum Ver- und Entschlüsseln der Daten genutzt wird. SSL unterstützt für die symmetrische Verschlüsselung mit diesem "session-key" u.a. die Verschlüsselungsverfahren DES und Triple DES.
7. Client und Server tauschen mit diesem "session-key" verschlüsselte Nachrichten aus und signalisieren damit ihre Kommunikationsbereitschaft.
8. Die SSL-Verbindung ist aufgebaut.

Ein Proxy Server ist ein Computerprogramm, das auf einer separaten Rechnereinheit, aber auch auf der gleichen Rechnereinheit wie das eigentliche Web Serverprogramm ablaufen kann und im Datenverkehr zwischen der über das Netzwerk anfragenden Arbeitsstation und dem Web Serverprogramm vermittelt. Aus Sicht des Web Servers verhält sich der Proxy Server wie ein Client, dem Client gegenüber wie ein Web Server. Im einfachsten Fall leitet der Proxy Server die Daten einfach weiter. Ein sog. http-Proxy Server, der zwischen Webbrowser (Client) und Web Server vermittelt, hat insbesondere bei sicherheitskritischen Anwendungen, wie online banking, eine Filterfunktion, so dass bestimmte Kategorien von Webseiten oder einzelne Webseiten für den Benutzer gesperrt und/oder Zugriffe darauf protokolliert werden. Auch kann der Inhalt auf schädliche Programme oder Funktionen durchsucht werden. Außerdem dient ein Proxy Server der Zugriffssteuerung: Damit der Web Server nicht frei über das Internet erreichbar ist, steuert und kontrolliert ein davor geschalteter Proxy Server den Zugriff darauf. Ein Angreifer kann dann den Web Server nicht mehr direkt angreifen, sondern nur den Proxy Server. Es kann auch der Zugriff von Clients auf Web Server nur über einen Proxy Server ermöglicht werden. Dabei kann der Proxy Server auch als Reverse Proxy konfiguriert sein. Dazu ist er logisch vor den anderen Web Servern und Applikations-Servern aufgestellt. Verbindungsanfragen aus dem Internet an einen Web Server werden durch den Proxy Server bearbeitet, welcher die Anfrage entweder vollständig selbst beantwortet, oder sie teilweise oder ganz an den bzw. einen der nachgeordneten Web Server weiterleitet. Der Reverse Proxy Server stellt ein weiteres Glied in der Sicherheitskette dar und trägt so zur Sicherheit der Web Server bei. Um sichere Webseiten schnell zu erzeugen, wird die SSL Verschlüsselung nicht vom Webserver selbst erledigt, sondern durch einen Reverse Proxy Server, der mit einer entsprechenden Beschleunigungshardware ausgestattet ist.

Die US 2001/0014158 beschreibt ein Client-Server-System, bei dem ein privater Schlüssel auf einem Verschlüsselungsserver gespeichert wird. Um den Schlüssel nutzen zu können, greift der Benutzer über sein Client-System auf den Server zu. Um den Schlüssel zu verwenden, d.h. für den Zugriff auf den Schlüssel, ist es erforderlich, das der Benutzer ein Passwort eingibt, welches dem Verschlüsselungsserver übermittelt wird. Daraufhin übermittelt der Verschlüsselungsserver den privaten Schlüssel des Benutzers in verschlüsselter Form an das Client-System.

Die WO 01/48948 beschreibt ein System, bei dem ein Schlüssel in einem Server bzw. einer Netzwerkeinrichtung erzeugt wird. Der Schlüssel wird sodann an einen Client bzw. ein Terminal übermittelt. Um die Sicherheit bei Verwendung des Schlüssels zu erhöhen, wird der Schlüssel in periodischen oder zufälligen Abständen gewechselt.

Zusammenfassend ist festzustellen, dass die heute verfügbaren Mechanismen zur vertraulichen Datenkommunikation zwischen einem Nutzer aus einer Vielzahl von Nutzern (zum Beispiel Bankkunden) und einer Institution (zum Beispiel einem Bankinstitut) aus den unterschiedlichsten Gründen nicht sicher sind. Dazu zählt, dass ein Nutzer in der Regel nicht über die notwendigen technischen Fachkenntnisse verfügt, und dass die Bedienung der Hard- und Software im Fall komplexerer Sicherheitsmechanismen für viele der Nutzer zu kompliziert ist und daher von ihnen abgelehnt wird. Außerdem ist vielfach das Bewusstsein zu wenig ausgeprägt, dass nur bei möglichst hoher Disziplin im Umgang mit sicherheitsrelevanter Information deren Missbrauch und damit ein Schaden für den einzelnen Nutzer / die Institution zu vermeiden oder für den Kriminellen zumindest zu erschweren ist.

### Der Erfindung zugrunde liegendes technisches Problem

Die Erfindung hat die Aufgabe, ein sicheres Rechnernetzwerk und ein Verfahren zum Aufbau einer sicheren Rechnernetzwerkverbindung bereitzustellen, damit ein Nutzer (aus einer Vielzahl von Nutzern) in dem Netzwerk mittels einer Netzwerk-Arbeitsstation auf seine Schlüssel mit hoher Sicherheit gegenüber unerwünschten Zugriffen Dritter zugreifen kann.

### Erfindungsgemäße Lösung

Zur Lösung dieser Aufgabe stellt die Erfindung ein Rechnernetzwerksystem mit den Merkmalen des Anspruchs 1 bereit

### Technische Merkmale der Erfindung

Dazu sind in einem Server-Client-Rechnernetzwerksystem zum Durchführen von kryptografischen Operationen über ein Netzwerk zwischen einer Client-Rechner-Arbeitsstation und einem Kryptografie-Server-Rechnersystem, in der Client-Rechner-Arbeitsstation und in dem Kryptografie-Server-Rechnersystem zur Kommunikation miteinander eingerichtete Computersoftware-Programme installiert. Diese Computersoftware-Programme werden ausgeführt, damit, wenn die Client-Rechner-Arbeitsstation eine Anfrage zum Durchführen einer kryptografischen Operation an das Kryptografie-Server-Rechnersystem richtet, diese von dem Kryptografie-Server-Rechnersystem beantwortet wird. Dazu fordert das Kryptografie-Server-Rechnersystem von der anfragenden Client-Rechner-Arbeitsstation eine starke Authentifizierung an. Als Reaktion hierauf greift die Client-Rechner-Arbeitsstation bei erfolgreicher Authentifizierung auf einen Schlüssel ihres Nutzers zu. Bei erfolgreicher Authentifizierung erhält die Client-Rechner-Arbeitsstation eine Freigabe dafür, lediglich eine einzige oder wenige kryptografische Operationen mit dem privaten Schlüssel zu initiieren. Dabei ist erfindungsgemäß der private Schlüssel auf dem Kryptografie-Server-Rechnersystem abgelegt. Der private Schlüssel wird nicht über das Netzwerk (NW) übertragen, sondern verbleibt stets in dem Kryptografie-Server-Rechnersystem. Die kryptografische/n Operation/en wird/werden nur innerhalb eines festgelegten, kurzen Zeitraums nach der erfolgreichen Authentifizierung zugelassen, um die von einer auf der Client-Rechner-Arbeitsstation ablaufenden Applikationsprogramm-Software angeforderte/n kryptografischen Operation/en auszuführen. Dabei stellt die Client-Rechner-Arbeitsstation das Ergebnis der kryptografischen Operation/en der Applikationsprogramm-Software zur Verfügung.

### Durch die Erfindung bewirkte technische Effekte

Die sog. Man-In-The-Middle-Angriffe sind ausgeschlossen, da aufgrund der erfindungsgemäßen Konfiguration die Client-Rechner-Arbeitsstation darüber informiert ist, mit welchem Kryptografie-Server-Rechnersystem die Verbindung besteht (Server Authentification), und der Schlüssel durch die starke Authentifizierung geschützt ist, weil er nicht über das Netzwerk übertragen wird, sondern stets in dem Kryptografie-Server-Rechnersystem verbleibt; dennoch steht der private Schlüssel dem Nutzer zur Verfügung.

### Vorteilhafte Ausgestaltungen und Weiterbildungen der Erfindung

Die kryptografischen Operationen können das Signieren eines Hashwertes oder das Entschlüsseln (Dechiffrieren) eines geheimen Schlüssels umfassen.

Bei dem erfindungsgemäßen Server-Client-Rechnernetzwerksystem kann das Kryptografie-Server-Rechnersystem zusätzlich einen Proxy Server und/oder einen Authentifizierungs-Server haben.

Für eine starke Authentifizierung kann ein für kurze Zeit gültiges, und/oder einmaliges, und/oder dynamisch erzeugtes Legitimationsmittel zwischen der Client-Rechner-Arbeitsstation und dem Kryptografie-Server-Rechnersystem ausgetauscht werden. Insbesondere kann das Legitimationsmittel ein Passwort, ein Kennsatz, oder dergl. sein. Es sind jedoch auch andere starke Authentifizierungen im Rahmen der vorliegenden Erfindung möglich und einsetzbar.

Bei dem erfindungsgemäßen Server-Client-Rechnernetzwerksystem ist die starke Authentifizierung in einem in einem Computer-Softwareprogramm in der Client-Rechner-Arbeitsstation implementiert, wobei das Computer-Softwareprogramm in der Client-Rechner-Arbeitsstation einen Nutzer vorzugsweise im Dialog auffordert, dessen ihn gegenüber dem Kryptografie-Server-Rechnersystem identifizierende Kennung einzugeben, und nach Eingabe der Kennung des Nutzers die starke Authentifizierung anstößt.

Weiterhin wird in dem erfindungsgemäßen Server-Client-Rechnernetzwerksystem in dem Kryptografie-Server-Rechnersystem die starke Authentifizierung überprüft, und bei korrekter Authentifizierung an die Client-Rechner-Arbeitsstation eine erfolgreiche Authentifizierung signalisiert.

Erfindungsgemäß fordert die Client-Rechner-Arbeitsstation einen Nutzer dazu auf, dessen Vertragsnummer oder eine sonstige Kennung einzugeben, mit der die Institution, zu deren Server-Rechnersystem er Zugang haben möchte, ihn identifizieren kann. Nach Eingabe der Vertragsnummer gibt bei dem erfindungsgemäßen Server-Client-Rechnernetzwerksystem die Client-Rechner-Arbeitsstation für den Nutzer nach Eingabe dessen Kennung eine Zeichenkette für den Nutzer (zum Beispiel auf einem Bildschirm oder dergl.) aus. Diese Zeichenkette hat der Nutzer (vorzugsweise innerhalb einer vorbestimmten Zeit von wenigen Minuten) in eine separate Rechnereinheit einzugeben. Vorher wurde die separate Rechnereinheit mit einer gesicherten Chipkarte verbunden und mittels einer dem Nutzer bekannten PIN (zum Beispiel durch Eingabe von dem Nutzer über eine Tastatur der Rechnereinheit) ist die gesicherte Chipkarte frei geschaltet worden. Daraufhin verknüpft die separate Rechnereinheit mit der Chipkarte unter Anwendung einer Verknüpfungsvorschrift die Zeichenkette mit einem in der Chipkarte abgelegten Schlüssel und gibt dem Nutzer eine Antwortzeichenkette aus. Diese Antwortzeichenkette gibt der Nutzer (zum Beispiel über eine Tastatur) in die Client-Rechner-Arbeitsstation ein. Die Client-Rechner-Arbeitsstation sendet diese Antwortzeichenkette an das Kryptografie-Server-Rechnersystem.

Es handelt sich hierbei also um ein interaktives Authentfizierungssystem, das Chipkartenbasiert ist. Ein Vorteil dieses Verfahrens ist die Kurzzeitigkeit der Geltung der Schlüssel/Daten. Zudem wird durch die erfindungsgemäße Vorgehensweise sichergestellt, dass die Generierung des Codes erst beim Verbindungsaufbau erfolgt. Dieser Code wird jedes Mal neu berechnet und ist nur für eine kurze Zeit gültig. Auf der Chipkarte ist ein Schlüssel gespeichert, der eindeutig einer (Vertrags-)Beziehung zwischen dem Nutzer und dem Betreiber des Kryptografie-Server-Rechnersystems zugeordnet ist. Der Inhalt der Chipkarte ist geschützt und kann weder kopiert noch von Dritten offen gelegt werden. Denn es werden nie alle Sicherheitselemente gleichzeitig über das Internet übertragen.

Erfindungsgemäß wird in dem Server-Rechnersystem (genauer gesagt, vorzugsweise in dem Kryptografie-Server-Rechnersystem) unter Anwendung einer entsprechenden Verknüpfungsvorschrift die dem Nutzer ausgegebene Zeichenkette mit dem in dem Server-Rechnersystem abgelegten privaten (vorzugsweise symmetrischen) Schlüssel verknüpft. Das Ergebnis der Verknüpfung wird mit der von dem Nutzer in die Client-Rechner-Arbeitsstation eingegebenen Antwortzeichenkette verglichen. Bei Übereinstimmung wird an die Client-Rechner-Arbeitsstation eine erfolgreiche Authentifizierung signalisiert.

Bei nicht erfolgreicher Authentifizierung bricht das Computer-Softwareprogramm die Kommunikation ab oder baut die gewünschte Verbindung gar nicht erst auf.

Des Weiteren betrifft die Erfindung ein Verfahren zum Durchführen von kryptografischen Operationen in einem Server-Client-Rechnernetzwerksystem über ein Netzwerk zwischen einer Client-Rechner-Arbeitsstation und einem Kryptografie-Server-Rechnersystem mit den vorstehend erläuterten Eigenschaften und Merkmalen. Außerdem betrifft die Erfindung ein Server-Rechnersystem, sowie eine Client-Rechner-Arbeitsstation, konfiguriert und programmiert zur Ausführung dieses Verfahrens.

Schließlich ist Gegenstand der Erfindung auch ein Computerprogrammprodukt mit computerausführbaren Programm-Objektcode zur Realisierung des Verfahrens, wobei der Programm-Objektcode, wenn er in einem oder mehreren Computern ausgeführt wird, dazu eingerichtet ist, in einem Server-Client-Rechnernetzwerksystem eine sichere Rechnernetzwerkverbindung nach einem der vorhergehenden Ansprüche zu bewirken.

### Kurzbeschreibung der Zeichnung

Weitere Eigenschaften, Vorteile, mögliche Abwandlungen und Alternativen sind in der nachstehenden Beschreibung von Ausführungsbeispielen der Erfindung unter Bezugnahme auf die Fig. veranschaulicht. Dabei ist:
- in Fig. 1: eine Konfiguration eines erfindungsgemäßen Server-Client-Rechnernetzwerksystem schematisch veranschaulicht;
- in Fig. 2: ein Ablauf der Schritte, die das erfindungsgemäße Server-Client-Rechnernetzwerksystem ausführt, schematisch veranschaulicht;
- in Fig. 2a: sind die Kategorien möglicher kryptografischen Operationen tabellarisch veranschaulicht; und
- in Fig. 3: ein Ablauf der Schritte, die erfindungsgemäß zur starken Authentifizierung auszuführen sind, schematisch veranschaulicht.

### Detaillierte Beschreibung erfindungsgemäßer Ausführungsbeispiele

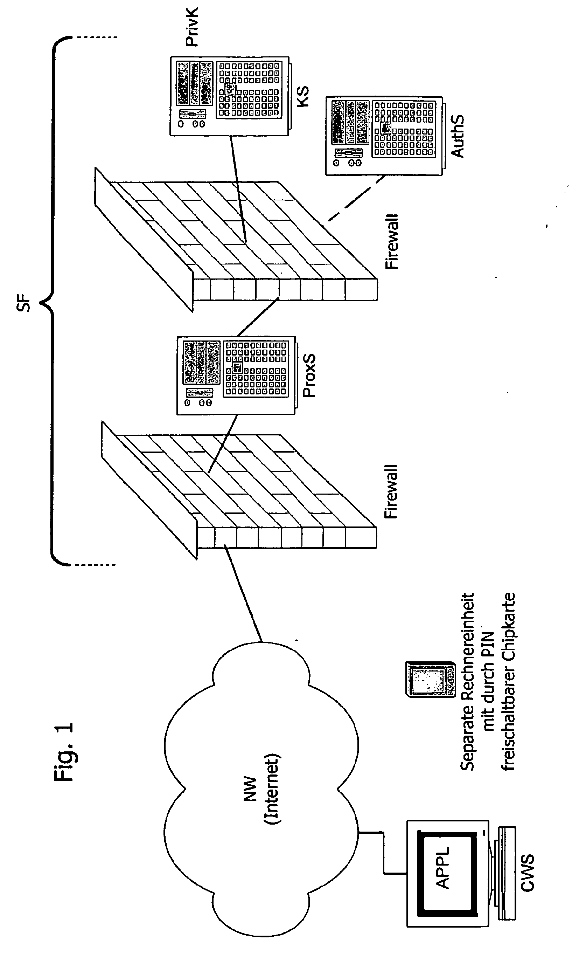

Fig. 1 zeigt ein Server-Client-Rechnernetzwerksystem zum Durchführen von kryptografischen Operationen über ein Netzwerk NW, zum Beispiel das Internet. Dabei findet Kommunikation zwischen einer Client-Rechner-Arbeitsstation CWS, zum Beispiel dem PC eines Bankkunden mit Internetzugang, und einer Serverfarm SF der Bank statt, die unter anderem einem Kryptografie-Server-Rechnersystem KS umfasst. Auf der Seite des Bankkunden ist außerdem eine separate Rechnereinheit mit einer Chipkarte vorhanden, die durch Eingabe einer PIN freischaltbar ist. Wie in Fig. 1 veranschaulicht ist, umfasst die Serverfarm SF neben dem Kryptografie-Server-Rechnersystem KS zusätzlich einen - vorgeschalteten - Proxy Server ProxS und einen Authentifizierungs-Server AuthS.

In der Client-Rechner-Arbeitsstation CWS und in dem Kryptografie-Server-Rechnersystem KS sind zur Kommunikation miteinander eingerichtete Computersoftware-Programme installiert. Diese Computersoftware-Programme werden ausgeführt, damit, wenn die Client-Rechner-Arbeitsstation CWS eine Anfrage zum Durchführen einer kryptografischen Operation an das Kryptografie-Server-Rechnersystem KS richtet, diese von dem Kryptografie-Server-Rechnersystem KS beantwortet wird.

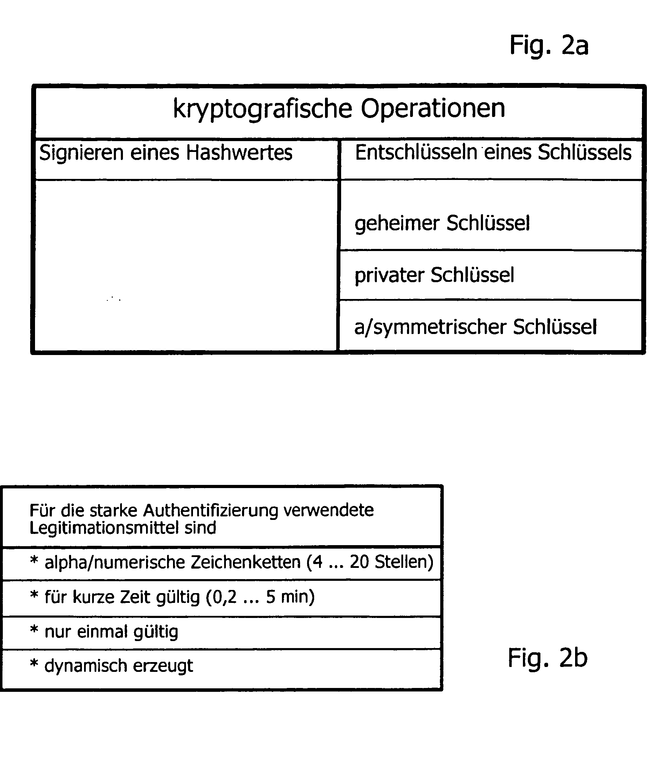

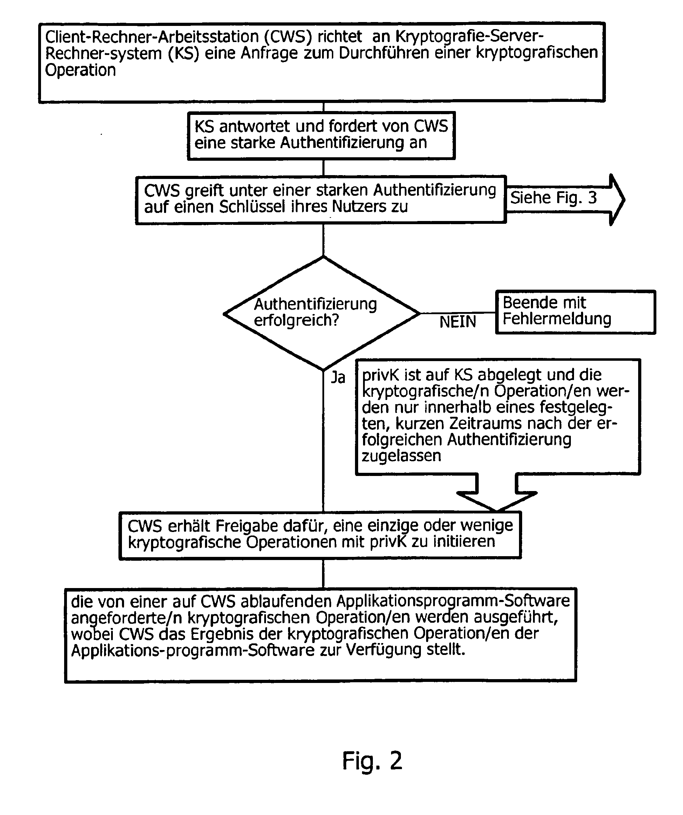

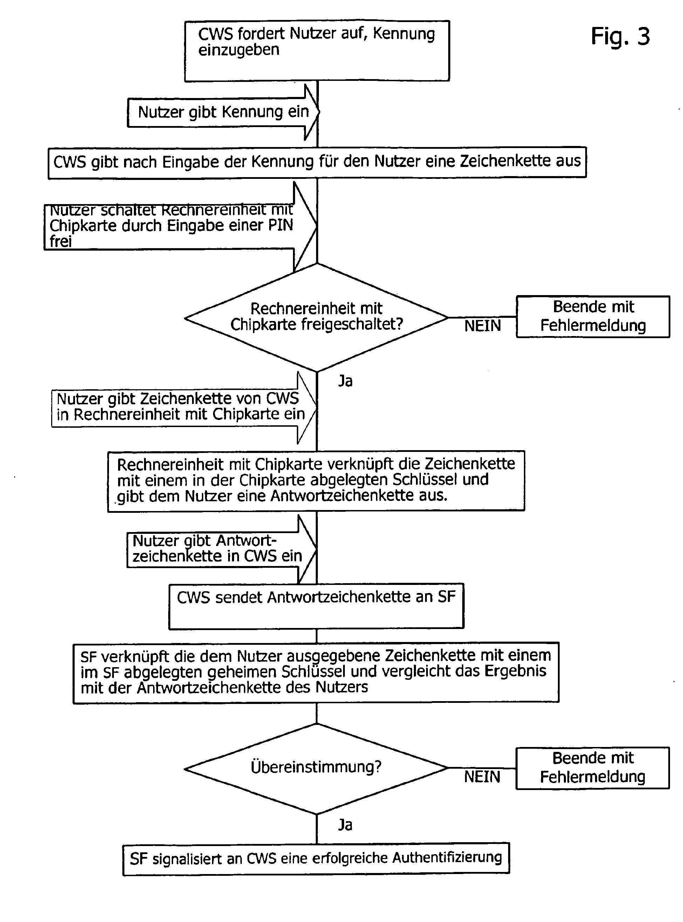

Der Ablauf dieser Programme sowie der Ablauf der Schritte, die zur starken Authentifizierung auszuführen sind, ist in den Fig. 2 und 3 veranschaulicht.

Zunächst fordert das Kryptografie-Server-Rechnersystem KS von der anfragenden Client-Rechner-Arbeitsstation CWS eine starke Authentifizierung an.

Daraufhin greift die Client-Rechner-Arbeitsstation CWS unter einer starken Authentifizierung auf einen Schlüssel ihres Nutzers zu. Die Details hierzu sind weiter unten Unterbezugnahme auf Fig. 3 beschrieben. Bei erfolgreicher Authentifizierung erhält die Client-Rechner-Arbeitsstation CWS eine Freigabe dafür, lediglich eine einzige oder wenige kryptografische Operationen mit dem privaten Schlüssel privK zu initiieren. Der private Schlüssel privK ist auf dem Kryptografie-Server-Rechnersystem KS abgelegt. Im Übrigen ist die kryptografische Operation nur innerhalb eines festgelegten, kurzen Zeitraums von etwa 0,2 ... 5 min nach der erfolgreichen Authentifizierung zugelassen wird um von einer auf der Client-Rechner-Arbeitsstation CWS ablaufenden Applikationsprogramm-Software Appl angeforderte kryptografische Operation auszuführen. Dabei stellt die Client-Rechner-Arbeitsstation CWS das Ergebnis der kryptografischen Operation/en der Applikationsprogramm-Software zur Verfügung.

Wie in Fig. 2a veranschaulicht ist, können die kryptografischen Operationen das Signieren eines Hashwertes oder das Entschlüsseln eines Schlüssels umfassen, wobei der Schlüssel symmetrisch sein kann, und/oder ein privater Schlüssel sein.

Wie in Fig. 2b veranschaulicht ist, kann die starke Authentifizierung ein für kurze Zeit gültiges, und/oder ein einmalig gültiges, und/oder dynamisch erzeugtes Legitimationsmittel verwenden, das zum Beispiel ein Passwort, ein Kennsatz, ein Ergebnis eines Anforderungs-Antwort-Ablaufes (Challenge-Response-Verfahren) oder dergl. sein kann und zwischen der Client-Rechner-Arbeitsstation CWS und dem Kryptografie-Server-Rechnersystem KS ausgetauscht wird.

Fig. 3 veranschaulicht die Abläufe im Zusammenhang mit der starken Authentifizierung. Diese ist - zumindest teilweise - in einem Computer-Softwareprogramm implementiert, das in der Client-Rechner-Arbeitsstation CWS abläuft. Dieses Computer-Softwareprogramm in der Client-Rechner-Arbeitsstation CWS fordert einen Nutzer im Dialog auf, dessen ihn gegenüber dem Kryptografie-Server-Rechnersystem KS identifizierende Kennung einzugeben. Nach Eingabe der Kennung des Nutzers stößt Computer-Softwareprogramm die starke Authentifizierung an.

Dazu wird in dem Kryptografie-Server-Rechnersystem KS das Legitimationsmittel der starken Authentifizierung überprüft, und bei korrekter Authentifizierung wird an die Client-Rechner-Arbeitsstation CWS eine erfolgreiche Authentifizierung signalisiert.

Die Client-Rechner-Arbeitsstation CWS gibt für den Nutzer nach Eingabe dessen Kennung eine Zeichenkette für den Nutzer aus, die der Nutzer in eine separate Rechnereinheit einzugeben hat. Vorher muss die separate Rechnereinheit mit einer gesicherten Chipkarte verbunden worden sein und mittels einer PIN frei geschaltet worden sein. Die separate Rechnereinheit mit der Chipkarte verknüpft unter Anwendung einer Verknüpfungsvorschrift die eingegebene Zeichenkette mit einem in der Chipkarte abgelegten Schlüssel. Daraufhin gibt die separate Rechnereinheit an den Nutzer eine Antwortzeichenkette aus. Diese Antwortzeichenkette hat der Nutzer in die Client-Rechner-Arbeitsstation CWS einzugeben. Die Client-Rechner-Arbeitsstation CWS sendet die Antwortzeichenkette zur Authentisierung an das Kryptografie-Server-Rechnersystem KS.

In dem Server-Rechnersystem SF wird unter Anwendung einer entsprechenden Verknüpfungsvorschrift die dem Nutzer ausgegebene Zeichenkette mit dem in dem Server-Rechnersystem SF abgelegten geheimen Schlüssel verknüpft. Das Ergebnis dieser Verknüpfung wird mit der von dem Nutzer in die Client-Rechner-Arbeitsstation eingegebenen Antwortzeichenkette verglichen. Bei Übereinstimmung wird an die Client-Rechner-Arbeitsstation CWS eine erfolgreiche Authentifizierung signalisiert.

## Patentansprüche

1. Server-Client-Rechnernetzwerksystem zum Durchführen von kryptografischen Operationen über ein Netzwerk (NW) zwischen einer Client-Rechner-Arbeitsstation (CWS) und einem Kryptografie-Server-Rechnersystem (KS), wobei
in der Client-Rechner-Arbeitsstation (CWS) und in dem Kryptografie-Server-Rechnersystem (KS) zur Kommunikation miteinander eingerichtete Computersoftware-Programme installiert sind und ausgeführt werden, damit, wenn die Client-Rechner-Arbeitsstation (CWS) eine Anfrage zum Durchführen einer kryptografischen Operation an das Kryptografie-Server-Rechnersystem (KS) richtet, diese von dem Kryptografie-Server-Rechnersystem (KS) beantwortet wird,
**dadurch gekennzeichnet, dass**
die Anfrage beantwortet wird, indem das Kryptografie-Server-Rechnersystem (KS) von der anfragenden Client-Rechner-Arbeitsstation (CWS) eine starke Authentifizierung anfordert, worauf die Client-Rechner-Arbeitsstation (CWS) bei erfolgreicher Authentifizierung auf einen privaten Schlüssel (privK) ihres Nutzers zugreift, und
die Client-Rechner-Arbeitsstation (CWS) bei erfolgreicher Authentifizierung eine Freigabe dafür erhält, lediglich eine einzige oder wenige kryptografische Operationen mit dem privaten Schlüssel (privK) zu initiieren, wobei
- der private Schlüssel (privK) auf dem Kryptografie-Server-Rechnersystem (KS) abgelegt ist und nicht über das Netzwerk (NW) übertragen wird, sondern stets in dem Kryptografie-Server-Rechnersystem (KS) verbleibt, und
- die kryptografische/n Operation/en nur innerhalb eines festgelegten, kurzen Zeitraums nach der erfolgreichen Authentifizierung zugelassen wird/werden, um die von einer auf der Client-Rechner-Arbeitsstation (CWS) ablaufenden Applikationsprogramm-Software angeforderte/n kryptografischen Operation/en auszuführen, wobei die Client-Rechner-Arbeitsstation (CWS) das Ergebnis der kryptografischen Operation/en der Applikationsprogramm-Software zur Verfügung stellt.

2. Server-Client-Rechnernetzwerksystem zum Durchführen von kryptografischen Operationen nach Anspruch 1, bei dem die kryptografischen Operationen
2.1. das Signieren eines Hashwertes oder
2.2. das Entschlüsseln eines Schlüssels
umfassen, wobei
2.2.1. der Schlüssel symmetrisch oder asymmetrisch sein kann, und/oder
2.2.2. ein privater, oder ein geheimer Schlüssel sein kann.

3. Server-Client-Rechnernetzwerksystem nach Anspruch 1 oder 2, bei dem das Kryptografie-Server-Rechnersystem (KS) zusätzlich einen Proxy Server (ProxS) und einen Authentifizierungs-Server (AuthS) hat.

4. Server-Client-Rechnernetzwerksystem nach einem der Ansprüche 1 bis 3, bei dem
4.1. die starke Authentifizierung ein
4.1.1. für kurze Zeit gültiges, und/oder
4.1.2. einmaliges, und/oder
4.1.3. dynamisches
Legitimationsmittel verwendet, das zwischen der Client-Rechner-Arbeitsstation (CWS) und dem Kryptografie-Server-Rechnersystem (KS) ausgetauscht wird.

5. Server-Client-Rechnernetrwerksystem nach Anspruch 4, bei dem das Legitimationsmittel ein Passwort, ein Kennsatz, oder ein Ergebnis eines Anforderungs-Antwort-Ablaufes, ist.

6. Server-Client-Rechnernetzwerksystem nach Anspruch 4 oder 5, bei dem die starke Authentifizierung in einem Computer-Softwareprogramm in der Client-Rechner-Arbeitsstation (CWS) implementiert ist, wobei
6.1. das Computer-Softwareprogramm in der Client-Rechner-Arbeitsstation (CWS) einen Nutzer vorzugsweise im Dialog auffordert, dessen ihn gegenüber dem Kryptografie-Server-Rechnersystem (KS) identifizierende Kennung einzugeben, und
6.2. nach Eingabe der Kennung des Nutzers die starke Authentifizierung anstößt.

7. Server-Client-Rechnernetzwerksystem nach Anspruch 6, bei dem in dem Kryptografie-Server-Rechnersystem (KS)
7.1. das Legitimationsmittel der starken Authentifizierung überprüft wird, und
7.2. bei korrekter Authentifizierung an die Client-Rechner-Arbeitsstation (CWS) eine erfolgreiche Authentifizierung signalisiert wird.

8. Server-Client-Rechnernetzwerksystem nach Anspruch 6, bei dem die Client-Rechner-Arbeitsstation (CWS) für den Nutzer nach Eingabe dessen Kennung eine Zeichenkette für den Nutzer ausgibt, die der Nutzer in eine separate Rechnereinheit einzugeben hat, die vorher mit einer gesicherten Chipkarte verbunden worden ist und mittels einer PIN frei geschaltet worden ist, worauf die separate Rechnereinheit mit der Chipkarte unter Anwendung einer Verknüpfungsvorschrift die Zeichenkette mit einem in der Chipkarte abgelegten Schlüssel verknüpft und dem Nutzer eine Antwortzeichenkette ausgibt, welche der Nutzer in die Client-Rechner-Arbeitsstation (CWS) einzugeben hat, und welche die Client-Rechner-Arbeitsstation (CWS) zur Authentisierung an das Kryptografie-Server-Rechnersystem (KS) sendet.

9. Server-Client-Rechnernetzwerksystem nach Anspruch 8, bei dem in dem Server-Rechnersystem (SF) unter Anwendung einer entsprechenden Verknüpfungsvorschrift die dem Nutzer ausgegebene Zeichenkette mit dem in dem Server-Rechnersystem (SF) abgelegten privaten Schlüssel (privK) verknüpft und mit der von dem Nutzer in die Client-Rechner-Arbeitsstation eingegebenen Antwortzeichenkette verglichen wird, und bei Übereinstimmung an die Client-Rechner-Arbeitsstation (CWS) eine erfolgreiche Authentifizierung signalisiert wird.

10. Verfahren zum Durchführen von kryptografischen Operationen in einem Server-Client-Rechnernetzwerksystem über ein Netzwerk (NW) zwischen einer Client-Rechner-Arbeitsstation (CWS) und einem Kryptografie-Server-Rechnersystem (KS), wobei
in der Client-Rechner-Arbeitsstation (CWS) und in dem Kryptografie-Server-Rechnersystem (KS) zur Kommunikation miteinander eingerichtete Computersoftware-Programme installiert sind und ausgeführt werden, damit, wenn die Client-Rechner-Arbeitsstation (CWS) eine Anfrage zum Durchführen einer kryptografischen Operation an das Kryptografie-Server-Rechnersystem (KS), diese von dem Kryptografie-Server-Rechnersystem (KS) beantwortet wird,
**dadurch gekennzeichnet, dass**
die Anfrage beantwortet wird, indem das Kryptografie-Server-Rechnersystem (KS) von der anfragenden Client-Rechner-Arbeitsstation (CWS) eine starke Authentifizierung anfordert, worauf die Client-Rechner-Arbeitsstation (CWS) bei erfolgreicher Authentifizierung auf einen privaten Schlüssel (privK) ihres Nutzers zugreift, und
die Client-Rechner-Arbeitsstation (CWS) bei erfolgreicher Authentifizierung eine Freigabe dafür erhält, lediglich eine einzige oder wenige kryptografische Operationen mit dem privaten Schlüssel (privK) zu initiieren, wobei
- der private Schlüssel (privK) auf dem Kryptografie-Server-Rechnersystem (KS) abgelegt ist und nicht über das Netzwerk (NW) übertragen wird, sondern stets in dem Kryptografie-Server-Rechnersystem (KS) verbleibt, und
- die kryptografische/n Operation/en nur innerhalb eines festgelegten, kurzen
Zeitraums nach der erfolgreichen Authentifizierung zugelassen wird/werden, um die von einer auf der Client-Rechner-Arbeitsstation (CWS) ablaufenden Applikationsprogramm-Software angeforderte/n kryptografischen Operation/en auszuführen, wobei die Client-Rechner-Arbeitsstation (CWS) das Ergebnis der kryptografischen Operation/en der Applikationsprogramm-Software zur Verfügung stellt.

11. Verfahren nach Anspruch 10, bei dem die kryptografischen Operationen das Signieren eines Hashwertes oder das Entschlüsseln eines geheimen Schlüssels umfassen.

12. Verfahren nach Anspruch 10 oder 11, bei dem das Kryptografie-Server-Rechnersystem (KS) zusätzlich einen Proxy Server (ProxS) und einen Authentifizierungs-Server (AuthS) hat.

13. Verfahren nach einem der Ansprüche 10 bis 12, bei dem
13.1. die starke Authentifizierung ein
13.1.1. für kurze Zeit gültiges, und/oder
13.1.2. einmaliges, und/oder
13.1.3. dynamisches
13.2. Legitimationsmittel ist, das zwischen der Client-Rechner-Arbeitsstation (CWS) und dem Kryptografie-Server-Rechnersystem (KS) ausgetauscht wird.

14. Verfahren nach Anspruch 13, bei dem das Legitimationsmittel ein Passwort oder; ein Kennsatz, ist.

15. Verfahren nach Anspruch 13 oder 14, bei dem die starke Authentifizierung in einem Computer-Softwareprogramm in der Client-Rechner-Arbeitsstation (CWS) implementiert ist, wobei
15.1. das Computer-Softwareprogramm in der Client-Rechner-Arbeitsstation (CWS) einen Nutzer im Dialog auffordert, dessen ihn gegenüber dem Kryptografie-Server-Rechnersystem (KS) identifizierende Kennung einzugeben, und
15.2. nach Eingabe der Kennung des Nutzers die starke Authentifizierung anstößt.

16. Verfahren nach Anspruch 15, bei dem in dem Kryptografie-Server-Rechnersystem (KS)
16.1. die starke Authentifizierung überprüft wird, und
16.2. bei korrekter Authentifizierung an die Client-Rechner-Arbeitsstation (CWS) eine erfolgreiche Authentifizierung signalisiert wird.

17. Verfahren nach Anspruch 15, bei dem die Client-Rechner-Arbeitsstation (CWS) für den Nutzer nach Eingabe dessen Kennung eine Zeichenkette für den Nutzer ausgibt, die der Nutzer in eine separate Rechnereinheit einzugeben hat, die vorher mit einer gesicherten Chipkarte verbunden worden ist und mittels einer PIN frei geschaltet worden ist, worauf die separate Rechnereinheit mit der Chipkarte unter Anwendung einer Verknüpfungsvorschrift die Zeichenkette mit einem in der Chipkarte abgelegten Schlüssel verknüpft und dem Nutzer eine Antwortzeichenkette ausgibt, welche der Nutzer in die Client-Rechner-Arbeitsstation (CWS) einzugeben hat, und welche die Client-Rechner-Arbeitsstation (CWS) zur Authentifizierung an das Kryptografie-Server-Rechnersystem (KS) sendet.

18. Verfahren nach Anspruch 17, bei dem in dem Server-Rechnersystem (SF) unter Anwendung einer entsprechenden Verknüpfungsvorschrift die dem Nutzer ausgegebene Zeichenkette mit dem in dem Server-Rechnersystem (SF) abgelegten privaten Schlüssel (privK) verknüpft und mit der von dem Nutzer in die Client-Rechner-Arbeitsstation eingegebenen Antwortzeichenkette verglichen wird, und bei Übereinstimmung an die Client-Rechner-Arbeitsstation (CWS) eine erfolgreiche Authentifizierung signalisiert wird.

19. Server-Rechnersystem (SF), konfiguriert und programmiert zur Ausführung des vorstehend definierten Verfahrens.

20. Client-Rechner-Arbeitsstation (CWS), konfiguriert und programmiert zur Ausführung des vorstehend definierten Verfahrens.

21. Computerprogrammprodukt mit computerausführbaren Programm-Objektcode entsprechend dem vorstehend definierten Verfahren, der, wenn er in einem oder mehreren Computern ausgeführt wird, dazu eingerichtet ist, in einem Server-Client-Rechnernetzwerksystem eine sichere Rechnernetzwerkverbindung nach einem der vorhergehenden Ansprüche zu bewirken.

## Claims

1. Server-client computer network system for carrying out cryptographic operations via a network (NW) between a client computer workstation (CWS) and a cryptography server computer system (KS), wherein
in the client computer workstation (CWS) and in the cryptography server computer system (KS), computer software programs set up to communicate with each other are installed and executed, so that when the client computer workstation (CWS) directs a request to carry out a cryptographic operation to the cryptography server computer system (KS), the request is answered by the cryptography server computer system (KS),
**characterized in that**
the request is answered **in that** the cryptography server computer system (KS) requests a strong authentication from the requesting client computer workstation (CWS),
whereupon the client computer workstation (CWS) accesses a private key (privK) of its user in the case of successful authentication, and
upon successful authentication, the client computer workstation (CWS) receives a release to initiate just one or a few cryptographic operations using the private key (privK), wherein
- the private key (privK) is held on the cryptography server computer system (KS) and is not transmitted via the network (NW) but always remains in the cryptography server computer system (KS), and
- the cryptographic operation(s) is/are permitted only within a defined, short period of time after the successful authentication, in order to
carry out the cryptographic operation(s) which an application program software running on the client computer workstation (CWS) has requested,
the client computer workstation (CWS) making the result of the cryptographic operation(s) available to the application program software.

2. Server-client computer network system for carrying out cryptographic operations according to Claim 1, wherein the cryptographic operations include
2.1. signing a hash value or
2.2. decrypting a key, wherein
2.2.1. the key can be symmetrical or asymmetrical, and/or
2.2.2. a private or a secret key.

3. Server-client computer network system according to Claim 1 or 2, wherein the cryptography server computer system (KS) additionally comprises a proxy server (ProxS) and an authentication server (AuthS).

4. Server-client computer network system according to one of Claims 1 to 3, wherein
4.1. the strong authentication uses a legitimation means which is
4.1.1. valid for a short time, and/or
4.1.2. valid once, and/or
4.1.3. dynamic,
and is exchanged between the client computer workstation (CWS) and the cryptography server computer system (KS).

5. Server-client computer network system according to Claim 4, wherein the legitimation means is a password, an identifying label or a result of a challenge-response sequence.

6. Server-client computer network system according to Claim 4 or 5, wherein the strong authentication is implemented in a computer software program in the client computer workstation (CWS), wherein
6.1. the computer software program in the client computer workstation (CWS) requests a user, preferably in a dialogue, to enter his or her identifier which identifies him or her to the cryptography server computer system (KS), and
6.2. after the user's identifier is entered, initiates the strong authentication.

7. Server-client computer network system according to Claim 6, wherein in the cryptography server computer system (KS),
7.1. the legitimation means of the strong authentication is checked, and
7.2. if the authentication is correct, a successful authentication is signalled to the client computer workstation (CWS).

8. Server-client computer network system according to Claim 6, wherein the client computer workstation (CWS), after his or her identifier is entered, outputs a character string for the user which the user must enter into a separate computer unit, which was previously connected to a secured chip card, and was activated by means of a PIN, whereupon the separate computer unit with the chip card combines the entered character string with a key held in the chip card, using a combination rule, and outputs to the user a response character string which the user must enter into the client computer workstation (CWS), and which the client computer workstation (CWS) sends to the cryptography server computer system (KS) for authentication.

9. Server-client computer network system according to Claim 8, wherein in the server computer system (SF), using an appropriate combination rule, the character string output to the user is combined with the private key (privK) held in the server computer system (SF), and compared with the response character string which the user entered into the client computer workstation, and if they agree, successful authentication is signalled to the client computer workstation (CWS).

10. Method for carrying out cryptographic operations in a server-client computer network system via a network (NW) between a client computer workstation (CWS) and a cryptography server computer system (KS), wherein
in the client computer workstation (CWS) and in the cryptography server computer system (KS), computer software programs which are set up to communicate with each other are installed and executed, so that when the client computer workstation (CWS) directs a request to carry out a cryptographic operation to the cryptography server computer system (KS), the request is answered by the cryptography server computer system (KS),
**characterized in that**
the request is answered **in that** the cryptography server computer system (KS) requests a strong authentication from the requesting client computer workstation (CWS),
whereupon the client computer workstation (CWS) accesses a private key (privK) of its user in the case of successful authentication, and
upon successful authentication, the client computer workstation (CWS) receives a release to initiate just one or a few cryptographic operations using the private key (privK), wherein
- the private key (privK) is filed on the cryptography server computer system (KS) and not transmitted via the network (NW) but always remains in the cryptography server computer system (KS), and
- the cryptographic operation(s) is/are permitted only within a defined, short period of time after the successful authentication, in order to
carry out the cryptographic operation(s) which an application program software running on the client computer workstation (CWS) has requested,
the client computer workstation (CWS) making the result of the cryptographic operation(s) available to the application program software.

11. Method according to Claim 10, wherein the cryptographic operations include signing a hash value or decrypting a secret key.

12. Method according to Claim 10 or 11, wherein the cryptography server computer system (KS) additionally has a proxy server (ProxS) and an authentication server (AuthS).

13. Method according to one of Claims 10 to 12, wherein
13.1. the strong authentication is a legitimation means which is
13.1.1. valid for a short time, and/or
13.1.2. valid once, and/or
13.1.3. dynamic,
13.2. and which is exchanged between the client computer workstation (CWS) and the cryptography server computer system (KS).

14. Method according to Claim 13, wherein the legitimation means is a password or an identifying label.

15. Method according to Claim 13 or 14, wherein the strong authentication is implemented in a computer software program in the client computer workstation (CWS), wherein
15.1. the computer software program in the client computer workstation (CWS) requests a user, in a dialogue, to enter his or her identifier which identifies him or her to the cryptography server computer system (KS), and
15.2. after the user's identifier is entered, initiates the strong authentication.

16. Method according to Claim 15, wherein in the cryptography server computer system (KS),
16.1. the strong authentication is checked, and
16.2. if the authentication is correct, a successful authentication is signalled to the client computer workstation (CWS).

17. Method according to Claim 15, wherein the client computer workstation (CWS)outputs for the user, after his or her identifier is entered, a character string which the user must enter into a separate computer unit, which was previously connected to a secured chip card and was activated by means of a PIN, whereupon the separate computer unit with the chip card combines the entered character string with a key which is held in the chip card, using a combination rule, and outputs to the user a response character string which the user must enter into the client computer workstation (CWS), and which the client computer workstation (CWS) sends to the cryptography server computer system (KS) for authentication.

18. Method according to Claim 17, wherein in the server computer system (SF), using an appropriate combination rule, the character string output to the user is combined with the private key (privK) held in the server computer system (SF), and compared with the response character string which the user entered into the client computer workstation, and if they agree, a successful authentication is signalled to the client computer workstation (CWS).

19. Server computer system (SF), configured and programmed to execute the method defined above.

20. Client computer workstation (CWS), configured and programmed to execute the method defined above.

21. Computer program product with computer-executable program object code in accordance with the method defined above, which, if it is executed in one or more computers, is set up to cause a secure computer network connection according to one of the preceding claims in a server-client computer network system.

## Revendications

1. Système de réseau d'ordinateurs serveur-client pour l'exécution d'opérations cryptographiques au moyen d'un réseau (NW) entre un poste de travail client-ordinateur (CWS) et un système d'ordinateur à cryptographie pour serveur (KS),
des programmes de logiciels informatiques aménagés pour la communication les uns avec les autres étant installés et exécutés au poste de travail client-ordinateur (CWS) et dans le système d'ordinateur à cryptographie pour serveur (KS), pour que, lorsque le poste de travail client-ordinateur (CWS) adresse une demande pour l'exécution d'une opération cryptographique au système d'ordinateur à cryptographie pour serveur (KS), le système d'ordinateur à cryptographie pour serveur (KS) réponde à cette demande,
**caractérisé en ce que**
la demande reçoit une réponse du fait que le système d'ordinateur à cryptographie pour serveur (KS) demande au poste de travail client-ordinateur (CWS) demandeur une authentification importante, après quoi le poste de travail client-ordinateur (CWS) a accès, en cas d'authentification réussie, à une clé privée (privK) de son utilisateur, et
le poste de travail client-ordinateur (CWS) reçoit, si l'authentification est réussie, une autorisation pour amorcer uniquement une seule ou quelques opérations cryptographiques avec la clé privée (privK),
- la clé privée (privK) étant déposée sur le système d'ordinateur à cryptographie pour serveur (KS) et n'étant pas transmise par le réseau (NW), mais restant toujours dans le système d'ordinateur à cryptographie pour serveur (KS), et
- l'opération (les opérations) cryptographique(s) n'étant autorisée(s) qu'à l'intérieur d'une brève période définie consécutive à l'authentification réussie, afin d'effectuer l'opération (les opérations) cryptographique (s) qui est/sont demandée(s) par un logiciel de programme d'application se déroulant sur le poste de travail client-ordinateur (CWS), le poste de travail client-ordinateur (CWS) mettant le résultat de l'opération (des opérations) cryptographique(s) à la disposition du logiciel de programme d'application.

2. Système de réseau d'ordinateurs serveur-client pour l'exécution d'opérations cryptographiques selon la revendication 1, dans lequel les opérations cryptographiques comprennent
2.1 le marquage d'une valeur de hachage ou
2.2 le décodage d'une clé,
2.2.1 la clé pouvant être symétrique ou asymétrique et/ou
2.2.2 pouvant être une clé privée ou une clé secrète.

3. Système de réseau d'ordinateurs serveur-client selon la revendication 1 ou 2, dans lequel le système d'ordinateur à cryptographie pour serveur (KS) a en supplément un serveur proxy (ProxS) et un serveur d'authentification (AuthS).

4. Système de réseau d'ordinateurs serveur-client selon l'une quelconque des revendications 1 à 3, dans lequel
4.1. l'authentification importante utilise
4.1.1. un moyen de légitimation valable pour une courte période et/ou
4.1.2. un moyen de légitimation unique et/ou
4.1.3. un moyen de légitimation dynamique, qui est échangé entre le poste de travail client-ordinateur (CWS) et le système d'ordinateur à cryptographie pour serveur (KS).

5. Système de réseau d'ordinateurs serveur-client selon la revendication 4, dans lequel le moyen de légitimation est un mot de passe, un label ou un résultat d'un déroulement de réponse de demande.

6. Système de réseau d'ordinateurs serveur-client selon la revendication 4 ou 5, dans lequel l'authentification importante est mise en place dans un programme de logiciel d'ordinateur au poste de travail client-ordinateur (CWS),
6.1. le programme de logiciel d'ordinateur demandant au poste de travail client-ordinateur (CWS) à un utilisateur de préférence par dialogue d'entrer son code l'identifiant par rapport au système d'ordinateur à cryptographie pour serveur (KS), et
6.2 déclenchant l'authentification importante après l'entrée du code de l'utilisateur.

7. Système de réseau d'ordinateurs serveur-client selon la revendication 6, dans lequel, dans le système d'ordinateur à cryptographie pour serveur (KS)
7.1 le moyen de légitimation de l'authentification importante est vérifié, et,
7.2 en cas d'authentification correcte, une authentification réussie est signalée au poste de travail client-ordinateur (CWS).

8. Système de réseau d'ordinateurs serveur-client selon la revendication 6, dans lequel le poste de travail client-ordinateur (CWS) édite pour l'utilisateur, après l'entrée de son code, une chaîne de caractères pour l'utilisateur que l'utilisateur doit entrer dans une unité d'ordinateur séparée, qui a été reliée auparavant à une carte à puce sécurisée et a été libérée au moyen d'un PIN, après quoi l'unité d'ordinateur avec la carte à puce associe en utilisant une instruction d'association la chaîne de caractères à un code déposé dans la carte à puce et émet une chaîne de caractères de réponse pour l'utilisateur, que celui-ci doit entrer dans le poste de travail client-ordinateur (CWS), et que le poste de travail client-ordinateur (CWS) envoie pour l'authentification au système d'ordinateur à cryptographie pour serveur (KS).

9. Système de réseau d'ordinateurs serveur-client selon la revendication 8, dans lequel, dans le système d'ordinateur pour serveur (SF), la chaîne de caractères éditée pour l'utilisateur est associée à la clé privée (privK) déposée dans le système d'ordinateur pour serveur (SF) en utilisant une instruction d'association correspondante et est comparée avec la chaîne de caractères de réponse entrée par l'utilisateur dans le poste de travail client-ordinateur, et en cas de concordance, une authentification réussie est signalée au poste de travail client-ordinateur (CWS).

10. Procédé pour l'exécution d'opérations cryptographiques dans un système de réseau d'ordinateurs serveur-client au moyen d'un réseau (NW) entre un poste de travail client-ordinateur (CWS) et un système d'ordinateur à cryptographie pour serveur (KS),
des programmes de logiciel informatiques mis en place pour la communication entre eux étant installés et exécutés au poste de travail client-ordinateur (CWS) et dans le système d'ordinateur à cryptographie pour serveur (KS), pour que, lorsque le poste de travail client-ordinateur (CWS) adresse une demande pour l'exécution d'une opération cryptographique au système d'ordinateur à cryptographie pour serveur (KS), cette demande reçoive une réponse du système d'ordinateur à cryptographie pour serveur (KS),
**caractérisé en ce que**
la demande reçoit une réponse du fait que le système d'ordinateur à cryptographie pour serveur (KS) demande au poste de travail client-ordinateur (CWS) demandeur une authentification importante, après quoi le poste de travail client-ordinateur (CWS) a accès, en cas d'authentification réussie, à une clé privée (privK) de son utilisateur, et
le poste de travail client-ordinateur (CWS) reçoit, en cas d'authentification réussie, une autorisation pour activer seulement une seule ou quelques opérations cryptographiques avec la clé privée (privK), sachant que
- la clé privée (privK) est déposée sur le système d'ordinateur à cryptographie pour serveur (KS) et n'est pas transmise par le réseau (NW), mais reste toujours dans le système d'ordinateur à cryptographie pour serveur (KS), et
- l'opération (les opérations) cryptographique(s) n'est(ne sont) autorisée(s) qu'à l'intérieur d'une période courte fixée après l'authentification réussie, afin d'exécuter l'opération (les opérations) cryptographique(s) demandée(s) par un logiciel de programme d'application se déroulant sur le poste de travail client-ordinateur (CWS), sachant que le poste de travail client-ordinateur (CWS) met le résultat de l'opération (des opérations) cryptographique(s) à la disposition du logiciel de programme d'application.

11. Procédé selon la revendication 10, dans lequel les opérations cryptographiques comprennent le marquage d'une valeur de hachage ou le décodage d'une clé secrète.

12. Procédé selon la revendication 10 ou 11, dans lequel le système d'ordinateur à cryptographie pour serveur (KS) a en supplément un serveur proxy (ProxS) et un serveur d'authentification (AuthS).

13. Procédé selon l'une quelconque des revendications 10 à 12, dans lequel
13.1. l'authentification importante est un
13.2. moyen de légitimation
13.1.1. valable pour une courte période, et/ou
13.1.2. unique et/ou
13.1.3. dynamique
qui est échangé entre le poste de travail client-ordinateur (CWS) et le système d'ordinateur à cryptographie pour serveur (KS).

14. Procédé selon la revendication 13, dans lequel le moyen de légitimation est un mot de passe ou un label.

15. Procédé selon la revendication 13 ou 14, dans lequel l'authentification importante est mise en place dans un programme de logiciel informatique au poste de travail client-ordinateur (CWS), sachant que
15.1 le programme de logiciel informatique demande au poste de travail client-ordinateur (CWS) à un utilisateur par voie de dialogue d'entrer son code qui l'identifie par rapport au système d'ordinateur à cryptographie pour serveur (KS), et
15.2 déclenche l'authentification importante après l'entrée du code de l'utilisateur.

16. Procédé selon la revendication 15, dans lequel, dans le système d'ordinateur à cryptographie pour serveur (KS)
16.1 l'authentification importante est vérifiée, et
16.2 en cas d'authentification correcte, une authentification réussie est signalée au poste de travail client-serveur (CWS).

17. Procédé selon la revendication 15, dans lequel le poste de travail client-ordinateur (CWS) édite, après l'entrée de son code, une chaîne de caractères pour l'utilisateur que l'utilisateur doit entrer dans une unité d'ordinateur séparée qui a été reliée auparavant à une carte à puce sécurisée et a été libérée au moyen d'un PIN, après quoi l'unité d'ordinateur avec la carte à puce associe, en utilisant une instruction d'association, la chaîne de caractères à un code déposé dans la carte à puce et édite une chaîne de caractères de réponse pour l'utilisateur, que l'utilisateur doit entrer dans le poste de travail client-ordinateur (CWS), et que le poste de travail client-ordinateur (CWS) envoie pour l'authentification au système d'ordinateur à cryptographie pour serveur (KS).

18. Procédé selon la revendication 17, dans lequel, dans le système d'ordinateur de serveur (SF), la chaîne de caractères éditée pour l'utilisateur est associée au code privé (privK) déposé dans le système d'ordinateur serveur (SF) en utilisant une instruction d'association correspondante et comparée avec la chaîne de caractères de réponse entrée par l'utilisateur dans le poste de travail client-ordinateur, et une authentification réussie est signalée en cas de concordance au poste de travail client-ordinateur (CWS).

19. Système d'ordinateur pour serveur (SF), configuré et programmé pour la mise en oeuvre du procédé défini plus haut.

20. Poste de travail client-ordinateur (CWS), configuré et programmé pour la mise en oeuvre du procédé défini ci-dessus.

21. Produit programme informatique avec code objet de programme exécutable par ordinateur selon le procédé défini ci-dessus, qui, lorsqu'il est exécuté sur un ou plusieurs ordinateurs, est aménagé pour entraîner dans un système de réseau d'ordinateurs serveur-client une liaison sûre de réseau d'ordinateurs selon l'une quelconque des revendications précédentes.
